(19) **Europäisches Patentamt**
**European Patent Office**
**Office européen des brevets**

(11) **EP 4 745 188 A1**

(12) # EUROPEAN PATENT APPLICATION
published in accordance with Art. 153(4) EPC

(43) Date of publication:
**20.05.2026 Bulletin 2026/21**

(21) Application number: **25749031.8**

(22) Date of filing: **24.01.2025**

(51) International Patent Classification (IPC):
*C08L 9/04* (2006.01)      *C08F 236/12* (2006.01)
*C08F 2/24* (2006.01)      *C08F 2/44* (2006.01)
*C08F 2/00* (2006.01)      *B29C 41/00* (2006.01)

(52) Cooperative Patent Classification (CPC):
B29C 41/00; B29C 41/14; C08F 2/00; C08F 2/24;
C08F 2/44; C08F 220/06; C08F 220/44;
C08F 236/06; C08F 236/12; C08F 279/02;
C08L 9/04; C08L 13/02; C08L 51/04

(86) International application number:
**PCT/KR2025/001522**

(87) International publication number:
**WO 2025/165128 (07.08.2025 Gazette 2025/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.01.2024 KR 20240015242**

(71) Applicant: **LG Chem, Ltd.
Seoul 07336 (KR)**

(72) Inventors:
• **KIM, Hyun Woo
Daejeon 34122 (KR)**
• **CHA, Yu Jin
Daejeon 34122 (KR)**
• **KIM, Jung Eun
Daejeon 34122 (KR)**

(74) Representative: **Vossius & Partner
Patentanwälte Rechtsanwälte mbB
Siebertstraße 3
81675 München (DE)**

(54) **LATEX COMPOSITION FOR DIP MOLDING, METHOD FOR PREPARING SAME, AND MOLDED ARTICLE**

(57)     The present invention relates to a latex composition for dip molding with improved latex stability, a method for producing the same, and a molded product molded therefrom and having improved wearing sensation and tensile properties. There are provided a latex composition for dip molding comprising: a first carboxylic acid-modified nitrile-based copolymer latex comprising a first carboxylic acid-modified nitrile-based copolymer; and a second carboxylic acid-modified nitrile-based copolymer latex comprising a second carboxylic acid-modified nitrile-based copolymer and an alkaline water-soluble resin unit, wherein the alkaline water-soluble resin comprises a conjugated diene-based monomer unit, an ethylenically unsaturated nitrile-based monomer unit, and an ethylenically unsaturated acid monomer unit, a method for producing the same, and a molded product molded therefrom.

**EP 4 745 188 A1**

**Description**

## TECHNICAL FIELD

Cross-reference to Related Application

The present application claims the benefit of priority based on Korean Patent Application No. 10-2024-0015242, filed on January 31, 2024, the entire contents disclosed in the Korean Patent Application are incorporated herein as a part of the specification.

Technical Field

The present invention relates to a latex composition for dip molding, having improved latex stability, a method for preparing the same, and a molded product molded therefrom and having improved wearing sensation and tensile properties.

## BACKGROUND ART

In the past, natural rubber has been mainly used as a raw material for industrial, medical, and food gloves, as well as products requiring elasticity such as balloons and condoms. However, due to the side effect of natural rubber causing serious protein allergies in some users, nitrile-based rubber is replacing natural rubber. Nitrile-based rubber has high chemical resistance, and is widely used in work gloves used by users who handle organic solvents, as well as medical and food gloves.

In addition, due to the unstable supply and demand of natural rubber, many glove manufacturing companies are recently converting natural rubber glove production lines to nitrile-based rubber glove production lines, and as awareness of safety increases, the use of disposable gloves manufactured from nitrile-based rubber is continuously increasing.

The nitrile-based rubber gloves are generally manufactured through dip molding from latex for dip molding. In this case, if the stability of the latex for dip molding is low, coagulation occurs, and the coagulation increases the defect ratio of a final manufactured dip molded product, causing a decrease in productivity, and in severe cases, a problem that dip molding is impossible.

Particularly, when the temperature drops below zero, such as in winter, the stability of the latex for dip molding rapidly decreases, and as a result, the occurrence of coagulation and sedimentation in a stored dip molding latex increases. Therefore, a method for improving the storage stability of the latex for dip molding as well as the low-temperature stability is required.

Meanwhile, the latex for dip molding is generally produced by emulsion polymerization, an emulsifier is essential for polymerization stability, and a considerable amount of the emulsifier remains in the latex, causing a foaming problem in the dip molded product obtained therefrom. Therefore, a leaching process is strengthened to suppress the generation of foam caused by the emulsifier residue in a final dip molded product, but there is a problem that a lot of water is consumed in the process. However, it is difficult to reduce the emulsifier to ensure the polymerization stability of latex for dip molding, and even if the polymerization stability is secured while reducing the emulsifier, there is a problem that the workability of manufacturing a molded product (reduction of syneresis time) is seriously reduced.

Therefore, a method for improving the stability and workability of the latex while reducing the content of the emulsifier contained in the latex for dip molding, is required.

[Prior Art Document]

[Patent Document]

(Patent document 1) KR 10-1775798 B1 (2017. 08. 31.)

## DISCLOSURE OF THE INVENTION

## TECHNICAL PROBLEM

The present invention has been devised to solve the problems of the prior art, and aims to provide a latex composition for dip molding, that has excellent stability and manufacturing workability of a molded product, while having a reduced emulsifier content.

In addition, the present invention aims to provide a method for preparing the latex composition for dip molding.

Also, the present invention aims to provide a molded product molded from the latex composition for dip molding and having excellent manufacturing workability, excellent tensile properties, and suppressed foam generation.

**TECHNICAL SOLUTION**

In order to solve the tasks, the present invention provides a latex composition for dip molding, a method for preparing the same and a molded product.

(1) The present invention provides a latex composition for dip molding, the latex composition comprising: a first carboxylic acid-modified nitrile-based copolymer latex comprising a first carboxylic acid-modified nitrile-based copolymer comprising: a first conjugated diene-based monomer unit; a first ethylenically unsaturated nitrile-based monomer unit; and a first ethylenically unsaturated acid monomer unit; and a second carboxylic acid-modified nitrile-based copolymer latex comprising a second carboxylic acid-modified nitrile-based copolymer comprising: a second conjugated diene-based monomer unit and a second ethylenically unsaturated nitrile-based monomer unit, and an alkaline water-soluble resin unit, wherein the alkaline water-soluble resin comprises a third conjugated diene-based monomer unit, a third ethylenically unsaturated nitrile-based monomer unit and a third ethylenically unsaturated acid monomer unit.

(2) The present invention provides the latex composition for dip molding according to (1) above, wherein the first carboxylic acid-modified nitrile-based copolymer latex and the second carboxylic acid-modified nitrile-based copolymer latex have a weight ratio of 1.00: 0.20 to 1.25.

(3) The present invention provides the latex composition for dip molding according to (1) or (2) above, wherein the first carboxylic acid-modified nitrile-based copolymer comprises: 35 wt% to 78 wt% of the first conjugated diene-based monomer unit; 20 wt% to 50 wt% of the first ethylenically unsaturated nitrile-based monomer unit; and 0.1 wt% to 10 wt% of the first ethylenically unsaturated acid monomer unit.

(4) The present invention provides the latex composition for dip molding according to any one among (1) to (3) above, wherein the second carboxylic acid-modified nitrile-based copolymer comprises: 60 wt% to 80 wt% of the second conjugated diene-based monomer unit; and 20 wt% to 40 wt% of the second ethylenically unsaturated nitrile-based monomer unit.

(5) The present invention provides the latex composition for dip molding according to any one among (1) to (4) above, wherein the second carboxylic acid-modified nitrile-based copolymer latex comprises 5 parts by weight to 25 parts by weight of the alkaline water-soluble resin unit with respect to 100 parts by weight of the second carboxylic acid-modified nitrile-based copolymer.

(6) The present invention provides the latex composition for dip molding according to any one among (1) to (5) above, wherein the alkaline water-soluble resin comprises: 40 wt% to 75 wt% of a third conjugated diene-based monomer unit; 10 wt% to 50 wt% of a third ethylenically unsaturated nitrile-based monomer unit; and 10 wt% to 50 wt% of a third ethylenically unsaturated acid monomer unit.

(7) The present invention provides the latex composition for dip molding according to any one among (1) to (6) above, wherein the second carboxylic acid-modified nitrile-based copolymer latex has a micelle form, the micelle is formed from the alkaline water-soluble resin unit, and the micelle comprises the second carboxylic acid-modified nitrile-based copolymer inside thereof.

(8) The present invention provides the latex composition for dip molding according to any one among (1) to (7) above, comprising 1.5 parts by weight to 2.5 parts by weight of an emulsifier with respect to total 100 parts by weight of a solid content.

(9) The present invention provides a method for preparing a latex composition for dip molding, the method comprising: a step of mixing a first carboxylic acid-modified nitrile-based copolymer latex and a second carboxylic acid-modified nitrile-based copolymer latex, wherein the first carboxylic acid-modified nitrile-based copolymer latex comprises a first carboxylic acid-modified nitrile-based copolymer comprising a first conjugated diene-based monomer unit, a first ethylenically unsaturated nitrile-based monomer unit, and a first ethylenically unsaturated acid monomer unit, the second carboxylic acid-modified nitrile-based copolymer latex comprises a second carboxylic acid-modified nitrile-based copolymer comprising a second conjugated diene-based monomer unit and a second ethylenically unsaturated nitrile-based monomer unit, and an alkaline water-soluble resin unit, and the second carboxylic acid-modified nitrile-based copolymer latex is prepared by mixing a second conjugated diene-based monomer, a second ethylenically unsaturated nitrile-based monomer, and an alkaline water-soluble resin solution, and subjecting the mixture to emulsion polymerization.

(10) The present invention provides the method for preparing a latex composition for dip molding according to (9) above, wherein the first carboxylic acid-modified nitrile-based copolymer latex and the second carboxylic acid-modified nitrile-based copolymer latex are mixed in a weight ratio of 1.00: 0.20 to 1.25.

(11) The present invention provides the method for preparing a latex composition for dip molding according to (9) or (10) above, wherein the alkaline water-soluble resin solution is used in an amount of 5 parts by weight to 25 parts by weight with respect to 100 parts by weight of the total amount of the second conjugated diene-based monomer and the second ethylenically unsaturated nitrile-based monomer, based on the solid content.

(12) The present invention provides the method for preparing a latex composition for dip molding according to any one among (9) to (11) above, wherein the alkaline water-soluble resin solution is injected at least twice in installments before and after the initiation of the emulsion polymerization.

(13) The present invention provides the method for preparing a latex composition for dip molding according to any one among (9) to (12) above, wherein the alkaline water-soluble resin solution is first injected before the initiation of the emulsion polymerization, and second injected after the initiation of the emulsion polymerization, and the second injection is continuously performed during a polymerization conversion ratio range of 30% to 70%.

(14) The present invention provides the method for preparing a latex composition for dip molding according to (13) above, wherein the alkaline water-soluble resin solution in the first injection and the alkaline water-soluble resin solution in the second injection have a weight ratio of 1:0.2 to 1 based on the solid content.

(15) The present invention provides the method for preparing a latex composition for dip molding according to any one among (8) to (13) above, wherein the alkaline water-soluble resin solution is prepared by a preparation method comprising: a step of emulsion polymerizing a third conjugated diene-based monomer, a third ethylenically unsaturated nitrile-based monomer, and a third ethylenically unsaturated acid monomer in a solvent to prepare a polymer latex; and a step of injecting a pH adjusting agent to the polymer latex.

(16) The present invention provides the method for preparing a latex composition for dip molding according to any one among (9) to (15) above, wherein the alkaline water-soluble resin solution has a pH of 7.0 to 10.0 at 25°C.

(17) The present invention provides the method for preparing a latex composition for dip molding according to any one among (9) to (16) above, wherein the first carboxylic acid-modified nitrile-based copolymer latex is prepared by emulsion polymerizing a first conjugated diene-based monomer; a first ethylenically unsaturated nitrile-based monomer; and a first ethylenically unsaturated acid monomer in a solvent.

(18) The present invention provides a molded product comprising a layer derived from the latex composition for dip molding according to any one among (1) to (8) above.

## ADVANTAGEOUS EFFECTS

The latex composition for dip molding according to the present invention includes a first carboxylic acid-modified nitrile-based copolymer latex and a second carboxylic acid-modified nitrile-based copolymer latex containing an alkaline water-soluble resin unit, and may have a reduced emulsifier content while exhibiting excellent latex stability and workability in the production of molded products.

In addition, a molded product according to the present invention may be molded from the latex composition for dip molding and have low foam generation and excellent tensile properties.

## BEST MODE FOR CARRYING OUT THE INVENTION

Hereinafter, the present invention will be described in more detail to assist the understanding of the present invention.

Words or terms used in the description and claims of the present invention shall not be interpreted as the meaning defined in commonly used dictionaries. The words or terms should be interpreted as having a meaning that is consistent with their meaning in the technical idea of the invention, based on the principle that an inventor may properly define the meaning of the words to best explain the invention.

### Definition of Terms

In the present invention, the term "monomer unit" may mean a component or a structure derived from a monomer, or the material itself, particularly, a repeating unit formed in a polymer through the participation of the monomer injected during polymerizing the polymer in a polymerization reaction.

In the present invention, the term "polymer" may include both a homopolymer formed by polymerization from one type of monomer and a copolymer formed by copolymerization from two types of monomers.

In the present invention, the terms "latex" and "emulsion" may mean that a polymer or copolymer polymerized by polymerization exists in a form dispersed in water, and as a specific example, may mean that fine particles of a rubber-like polymer or a rubber-like copolymer polymerized by emulsion polymerization exist in a colloidal state dispersed in a solvent (water), and in the present invention, "latex" and "emulsion" may be used interchangeably.

The term "composition" used in the present invention includes a mixture of materials including the corresponding composition as well as reaction products and decomposition products formed from the material of the corresponding composition.

In the present invention, the term "layer derived fro m" may refer to a layer formed from a polymer or copolymer, and as a specific example, may refer to a layer formed from a polymer or copolymer by attaching, fixing, and/or polymerizing the polymer or copolymer on a dip molding frame when manufacturing a dip molded product.

**Latex Composition for Dip Molding**

The present invention provides a latex composition for dip molding, which has excellent latex stability and workability in manufacturing a molded product while having a reduced emulsifier content.

The latex composition for dip molding according to an embodiment of the present invention comprises a first carboxylic acid-modified nitrile-based copolymer latex comprising a first carboxylic acid-modified nitrile-based copolymer comprising: a first conjugated diene-based monomer unit; a first ethylenically unsaturated nitrile-based monomer unit; and a first ethylenically unsaturated acid monomer unit, and a second carboxylic acid-modified nitrile-based copolymer latex comprising a second carboxylic acid-modified nitrile-based copolymer comprising: a second conjugated diene-based monomer unit; and a second ethylenically unsaturated nitrile-based monomer unit, and an alkaline water-soluble resin unit, wherein the alkaline water-soluble resin may comprise a third conjugated diene-based monomer unit, a third ethylenically unsaturated nitrile-based monomer unit, and a third ethylenically unsaturated acid monomer unit.

According to an embodiment of the present invention, the alkali water-soluble resin (ASR; alkali soluble resin) may be an alkali-soluble polymer composition or an alkali-soluble emulsion polymer.

In general, the carboxylic acid-modified nitrile-based copolymer latex constituting the latex composition for dip molding is prepared by emulsion polymerization, and in this case, an emulsifier is essential for polymerization stability, and a considerable amount of the emulsifier remains in the latex, which causes a foam generation problem in the dip molded product obtained from the latex composition for dip molding containing the emulsifier. Accordingly, a leaching process is strengthened to suppress foam generation due to the emulsifier residue in a final dip molded product, but there is a problem that a lot of water is consumed in the process. However, it is difficult to reduce the emulsifier for polymerization stability, and even if the polymerization stability is secured by reducing the emulsifier, there is a problem that the manufacturing workability (reduction of syneresis time) of the molded product is seriously reduced.

However, the latex composition for dip molding according to an embodiment of the present invention includes a first carboxylic acid-modified nitrile-based copolymer latex and a second carboxylic acid-modified nitrile-based copolymer latex prepared by emulsifying an alkaline water-soluble resin solution with a conjugated diene-based monomer and an ethylenically unsaturated nitrile-based monomer, thereby having a reduced amount of residual emulsifier and excellent workability in manufacturing molded products.

Hereinafter, the latex composition for dip molding according to an embodiment of the present invention is specifically described by dividing into the constituent components.

*First Carboxylic Acid-modified Nitrile-based Copolymer Latex*

According to an embodiment of the present invention, the first carboxylic acid-modified nitrile-based copolymer latex may be a latex state in which a first carboxylic acid-modified nitrile-based copolymer is dispersed in a solvent, and the solvent may be an aqueous solvent. As a specific example, the aqueous solvent may be water, and the water may be ion-exchanged water or distilled water.

According to an embodiment of the present invention, the first carboxylic acid-modified nitrile-based copolymer may include a first conjugated diene-based monomer unit, a first ethylenically unsaturated nitrile-based monomer unit, and a first ethylenically unsaturated acid monomer unit.

According to an embodiment of the present invention, the first conjugated diene-based monomer for forming the first conjugated diene-based monomer unit of the first carboxylic acid-modified nitrile-based copolymer may be one or more selected from the group consisting of 1,3-butadiene, 2,3-dimethyl-1,3-butadiene, 2-ethyl-1,3-butadiene, 1,3-pentadiene, and isoprene, specifically, 1,3-butadiene or isoprene, and more specifically, 1,3-butadiene.

According to an embodiment of the present invention, the first carboxylic acid-modified nitrile-based copolymer may include 35 wt% to 78 wt%, 40 wt% to 75 wt%, or 45 wt% to 70 wt% of the repeating unit derived from the first conjugated diene-based monomer, and within this range, a molded product molded from a latex composition for dip molding, including a carboxylic acid-modified nitrile-based copolymer latex including the first carboxylic acid-modified nitrile-based copolymer has the effects of being flexible and having excellent wearing sensation, as well as excellent oil resistance and tensile strength.

According to an embodiment of the present invention, the first ethylenically unsaturated nitrile-based monomer forming the first ethylenically unsaturated nitrile-based monomer unit of the first carboxylic acid-modified nitrile-based copolymer may be one or more selected from the group consisting of acrylonitrile, methacrylonitrile, fumaronitrile, $\alpha$-chloronitrile, and $\alpha$-cyano ethyl acrylonitrile, specifically, acrylonitrile and methacrylonitrile, and more specifically, acrylonitrile.

According to an embodiment of the present invention, the first carboxylic acid-modified nitrile-based copolymer may include 20 wt% to 50 wt%, 20 wt% to 45 wt%, or 25 wt% to 40 wt% of the first ethylenically unsaturated nitrile-based monomer unit, and within this range, a molded product molded from a latex composition for dip molding including the first carboxylic acid-modified nitrile-based copolymer latex including the first carboxylic acid-modified nitrile-based copolymer has the effects of being flexible and having excellent wearing sensation, as well as excellent oil resistance and tensile strength.

According to an embodiment of the present invention, the first ethylenically unsaturated acid monomer forming the first ethylenically unsaturated acid monomer unit of the first carboxylic acid-modified nitrile-based copolymer may be one or more selected from the group consisting of an ethylenically unsaturated monomer containing an acidic group such as a carboxyl group, a sulfonic acid group and an acid anhydride group, specifically, ethylenically unsaturated carboxylic acid monomers such as acrylic acid, methacrylic acid, itaconic acid, maleic acid, and fumaric acid; polycarboxylic anhydrides such as maleic anhydride and citraconic anhydride; ethylenically unsaturated sulfonic acid monomers such as styrene sulfonic acid; ethylenically unsaturated polycarboxylic acid partial ester monomers such as monobutyl fumarate, monobutyl maleate, and mono-2-hydroxypropyl maleate, more specifically, one or more selected from the group consisting of acrylic acid, methacrylic acid, itaconic acid, maleic acid, and fumaric acid, and further more specifically, methacrylic acid. The first ethylenically unsaturated acid monomer may be used in the form of a salt such as an alkali metal salt or an ammonium salt during polymerization.

According to an embodiment of the present invention, the first carboxylic acid-modified nitrile-based copolymer may include 0.1 wt% to 10 wt%, 0.5 wt% to 9 wt%, or 1 wt% to 8 wt% of the first ethylenically unsaturated acid monomer unit, and within this range, a molded product molded from a latex composition for dip molding including the first carboxylic acid-modified nitrile-based copolymer latex including the first carboxylic acid-modified nitrile-based copolymer has the effects of being flexible, having excellent wearing sensation, and at the same time, having excellent tensile strength.

*Second Carboxylic Acid-modified Nitrile-based Copolymer Latex*

According to an embodiment of the present invention, the second carboxylic acid-modified nitrile-based copolymer latex may be a latex state in which the second carboxylic acid-modified nitrile-based copolymer and the alkaline water-soluble resin unit are dispersed in a solvent, and the solvent may be an aqueous solvent. As a specific example, the aqueous solvent may be water, and the water may be ion-exchanged water or distilled water.

According to an embodiment of the present invention, the second carboxylic acid-modified nitrile-based copolymer latex may include a second carboxylic acid-modified nitrile-based copolymer including a second conjugated diene-based monomer unit and a second ethylenically unsaturated nitrile-based monomer unit, and an alkaline water-soluble resin unit.

According to an embodiment of the present invention, the second carboxylic acid-modified nitrile-based copolymer latex has a micelle form, the micelle is formed from the alkaline water-soluble resin unit, and the micelle may include the second carboxylic acid-modified nitrile-based copolymer including the second conjugated diene-based monomer unit and the second ethylenically unsaturated nitrile-based monomer unit, inside the micelle. Specifically, the alkaline water-soluble resin included in the second carboxylic acid-modified nitrile-based copolymer latex is a polymerization product of a hydrophilic ethylenically unsaturated acid monomer, and hydrophobic conjugated diene-based monomer and ethylenically unsaturated nitrile-based monomer, and is dissolved in an alkaline aqueous solution state when the ethylenically unsaturated acid is ionized at a pH of 7 or higher. Accordingly, when preparing the second carboxylic acid-modified nitrile-based copolymer, the hydrophobic conjugated diene-based monomer and the ethylenically unsaturated nitrile-based monomer are mixed with the alkaline water-soluble resin solution, and the hydrophobic portion of the alkaline water-soluble resin is distributed in the hydrophobic monomer, and the hydrophilic portion, the ionized ethylenically unsaturated acid, is distributed in the aqueous phase, thereby forming a micelle form similar to a general emulsifier.

Due to the properties of the alkaline water-soluble resin, the second carboxylic acid-modified nitrile-based copolymer according to an embodiment of the present invention may easily undergo a polymerization reaction without a general emulsifier or with a very small amount of the emulsifier, since the alkaline water-soluble resin acts as an emulsifier.

In addition, according to an embodiment of the present invention, the "alkaline water-soluble resin unit" may represent a component or structure derived from the alkaline water-soluble resin, or the material itself, and as an embodiment, may be an alkaline water-soluble resin which is dispersed together with the second carboxylic acid-modified nitrile-based copolymer in the second carboxylic acid-modified nitrile-based copolymer latex. In another embodiment, the alkaline water-soluble resin may act as a reactive polymer emulsifier, and may participate in a polymerization reaction together with the second conjugated diene-based monomer and the second ethylenically unsaturated nitrile-based monomer constituting the second carboxylic acid-modified nitrile-based copolymer to form a chemical bond and/or a strong physical bond with a polymer chain. In this case, the alkaline water-soluble resin unit may include a unit (part) including a component or a structure derived from the alkaline water-soluble resin forming the chemical bond and/or a physical bond with the polymer chain.

According to an embodiment of the present invention, the second conjugated diene-based monomer for forming the second conjugated diene-based monomer unit of the second carboxylic acid-modified nitrile-based copolymer may be the same as that described in the first conjugated diene-based monomer for forming the first conjugated diene-based monomer unit in the first carboxylic acid-modified nitrile-based copolymer, and specifically, the second conjugated diene-based monomer may be one or more selected from the group consisting of 1,3-butadiene, 2,3-dimethyl-1,3-butadiene, 2-ethyl-1,3-butadiene, 1,3-pentadiene, and isoprene, specifically, 1,3-butadiene or isoprene, and more specifically, 1,3-butadiene. In this case, the second conjugated diene-based monomer for forming the second conjugated diene-based monomer unit of the second carboxylic acid-modified nitrile-based copolymer may be the same as or different from the first conjugated diene-based monomer for forming the first conjugated diene-based monomer unit of the first carboxylic acid-modified nitrile-based copolymer.

According to an embodiment of the present invention, the second carboxylic acid-modified nitrile-based copolymer may include 65 wt% to 80 wt%, 65 wt% to 75 wt%, or 65 wt% to 70 wt% of the repeating unit derived from the second conjugated diene-based monomer, and within this range, a molded product molded from a latex composition for dip molding including a second carboxylic acid-modified nitrile-based copolymer latex including the second carboxylic acid-modified nitrile-based copolymer is flexible and has excellent wearing sensation, and at the same time has excellent effects of oil resistance and tensile strength.

According to an embodiment of the present invention, the second ethylenically unsaturated nitrile-based monomer forming the second ethylenically unsaturated nitrile-based monomer unit of the second carboxylic acid-modified nitrile-based copolymer may be the same as that described in the first ethylenically unsaturated nitrile-based monomer for forming the first ethylenically unsaturated nitrile-based monomer unit in the first carboxylic acid-modified nitrile-based copolymer latex, and specifically, the second ethylenically unsaturated nitrile-based monomer may be one or more selected from the group consisting of acrylonitrile, methacrylonitrile, fumaronitrile, $\alpha$-chloronitrile, and $\alpha$-cyano ethyl acrylonitrile, specifically, acrylonitrile and methacrylonitrile, and more specifically, acrylonitrile. In this case, the second ethylenically unsaturated nitrile-based monomer for forming the second ethylenically unsaturated nitrile-based monomer unit of the second carboxylic acid-modified nitrile-based copolymer latex may be the same as or different from the first ethylenically unsaturated nitrile-based monomer for forming the first ethylenically unsaturated nitrile-based monomer unit of the first carboxylic acid-modified nitrile-based copolymer.

According to an embodiment of the present invention, the second carboxylic acid-modified nitrile-based copolymer may include 20 wt% to 40 wt%, 25 wt% to 35 wt%, or 25 wt% to 30 wt% of the second ethylenically unsaturated nitrile-based monomer unit, and within this range, a molded product molded from a latex composition for dip molding including the second carboxylic acid-modified nitrile-based copolymer latex containing the second carboxylic acid-modified nitrile-based copolymer is flexible and has excellent wearing sensation, and at the same time has excellent oil resistance and tensile strength.

According to an embodiment of the present invention, the alkaline water-soluble resin forming the alkaline water-soluble resin unit of the second carboxylic acid-modified nitrile-based copolymer may include a third conjugated diene-based monomer unit, a third ethylenically unsaturated nitrile-based monomer unit, and a third ethylenically unsaturated acid monomer unit.

According to an embodiment of the present invention, the alkaline water-soluble resin is characterized by including a monomer unit derived from the same monomer or a monomer of the same series as the carboxylic acid-modified nitrile-based copolymer, and accordingly, may act as a stabilizer such as an emulsifier during latex polymerization, so that the alkaline water-soluble resin may replace the emulsifier or reduce the amount used while having excellent polymerization stability, and simultaneously may improve the manufacturing workability of a molded product of a latex composition for dip molding including the second carboxylic acid-modified nitrile-based copolymer latex including the same, as well as the mechanical properties such as the wearing sensation and tensile properties of the molded product.

According to an embodiment of the present invention, the third conjugated diene-based monomer for forming the third conjugated diene-based monomer unit of the alkaline water-soluble resin may be one or more selected from the group consisting of 1,3-butadiene, 2,3-dimethyl-1,3-butadiene, 2-ethyl-1,3-butadiene, 1,3-pentadiene, and isoprene, and as a specific example, may be 1,3-butadiene or isoprene, and as a more specific example, may be 1,3-butadiene.

According to an embodiment of the present invention, the third ethylenically unsaturated nitrile-based monomer forming the third ethylenically unsaturated nitrile-based monomer unit of the alkaline water-soluble resin may be one or more selected from the group consisting of acrylonitrile, methacrylonitrile, fumaronitrile, $\alpha$-chloronitrile, and $\alpha$-cyano ethyl acrylonitrile, and as a specific example, may be acrylonitrile and methacrylonitrile, and as a more specific example, may be acrylonitrile.

According to an embodiment of the present invention, the third ethylenically unsaturated acid monomer forming the third ethylenically unsaturated acid monomer unit of the alkaline water-soluble resin may be an ethylenically unsaturated monomer containing an acidic group such as a carboxyl group, a sulfonic acid group, and an acid anhydride group, and as a specific example, may be one or more selected from the group consisting of an ethylenically unsaturated carboxylic acid monomer such as acrylic acid, methacrylic acid, itaconic acid, maleic acid, and fumaric acid; polycarboxylic acid anhydrides such as maleic anhydride and citraconic anhydride; ethylenically unsaturated sulfonic acid monomers such as styrene sulfonic acid; and ethylenically unsaturated polycarboxylic acid partial ester monomers such as monobutyl fumarate, monobutyl maleate and mono-2-hydroxypropyl maleate, more specifically, may be one or more selected from the group consisting of acrylic acid, methacrylic acid, itaconic acid, maleic acid and fumaric acid, and further more specifically, may be methacrylic acid. The third ethylenically unsaturated acid monomer may be used in the form of a salt such as an alkali metal salt or an ammonium salt during polymerization.

According to an embodiment of the present invention, the alkaline water-soluble resin may include 40 wt% to 75 wt% of the third conjugated diene-based monomer unit, 10 wt% to 50 wt% of the third ethylenically unsaturated nitrile-based monomer unit, and 10 wt% to 50 wt% of the third ethylenically unsaturated acid monomer unit, and within the ranges, the glass transition temperature targeted by the present invention may be satisfied, thereby maintaining a balance between wearing sensation and tensile properties.

According to an embodiment of the present invention, the alkaline water-soluble resin may include the third conjugated diene-based monomer unit in an amount of 40 wt% or more, 45 wt% or more, 50 wt% or more, 55 wt% or more, or 60 wt% or more, and may also include in an amount of 75 wt% or less, 70 wt% or less, 65 wt% or less, or 60 wt% or less, and within this range, the glass transition temperature may be controlled, and mechanical properties such as tensile properties of a molded product molded from a latex composition for dip molding containing the same may be improved.

According to an embodiment of the present invention, the alkaline water-soluble resin may include the third ethylenically unsaturated nitrile-based monomer unit in an amount of 10 wt% or more, 11 wt% or more, 12 wt% or more, 13 wt% or more, 14 wt% or more, 15 wt% or more, 16 wt% or more, 17 wt% or more, 18 wt% or more, 19 wt% or more, or 20 wt% or more, and may also include in an amount of 50 wt% or less, 45 wt% or less, 40 wt% or less, 35 wt% or less, 30 wt% or less, 25 wt% or less, 24 wt% or less, 23 wt% or less, 22 wt% or less, 21 wt% or less, or 20 wt% or less, and within this range, the glass transition temperature may be controlled and the polymerization stability of the latex composition for dip molding containing the same may be improved, and the mechanical properties such as the wearing sensation and tensile properties of the molded product molded therefrom may be simultaneously improved.

According to an embodiment of the present invention, the alkaline water-soluble resin may include 10 wt% or more, 11 wt% or more, 12 wt% or more, 13 wt% or more, 14 wt% or more, 15 wt% or more, 16 wt% or more, 17 wt% or more, 18 wt% or more, 19 wt% or more, or 20 wt% or more of the third ethylenically unsaturated acid monomer unit, and may also include 50 wt% or less, 45 wt% or less, 40 wt% or less, 35 wt% or less, 30 wt% or less, 25 wt% or less, 24 wt% or less, 23 wt% or less, 22 wt% or less, 21 wt% or less, or 20 wt% or less, and within this range, the glass transition temperature may be controlled, and mechanical properties such as wearing sensation and tensile properties of a molded product molded from the latex composition for dip molding containing the same may be improved at the same time.

According to an embodiment of the present invention, the alkaline water-soluble resin may have a weight average molecular weight of 5,000 g/mol to 50,000 g/mol. As a specific example, the polymer may have a weight average molecular weight of 5,000 g/mol or more, 5,500 g/mol or more, 6,000 g/mol or more, 6,500 g/mol or more, 7,000 g/mol or more, 7,500 g/mol or more, 8,000 g/mol or more, 8,500 g/mol or more, 9,000 g/mol or more, 9,500 g/mol or more, 10,000 g/mol or more, 10,500 g/mol or more, 11,000 g/mol or more, 11,500 g/mol or more, or 12,000 g/mol or more, and further, 50,000 g/mol or less, 49,000 g/mol or less, 48,000 g/mol or less, 47,000 g/mol or less, 46,000 g/mol or less, 45,000 g/mol or less, 40,000 g/mol or less, 35,000 g/mol or less, 30,000 g/mol or less, 25,000 g/mol or less, 20,000 g/mol or less, 15,000 g/mol or less, 14,000 g/mol or less, 13,000 g/mol or less, or 12,000 g/mol or less.

According to an embodiment of the present invention, the alkaline water-soluble resin may have a glass transition temperature of -34°C to 33°C. As a specific example, the polymer may have a glass transition temperature of -34°C or more, -33°C or more, -32°C or more, -30°C or more, -29°C or more, -28°C or more, -27°C or more, -26°C or more, -25°C or more, -20°C or more, -15°C or more, -14°C or more, -13°C or more, or -12°C or more, and 33°C or less, 32°C or less, 31°C or less, 30°C or less, 29°C or less, 28°C or less, 27°C or less, 26°C or less, 25°C or less, 24°C or less, 23°C or less, 22°C or less, 21°C or less, 20°C or less, 15°C or less, 10°C or less, 5°C or less, 0°C or less, -5°C or less, -10°C or less, -11°C or less, or -12°C or less. In this case, the glass transition temperature may be controlled by the content of each monomer unit of the polymer, particularly, the content of the conjugated diene-based monomer unit, and may be measured using a differential scanning calorimetry (DSC).

### Latex Composition for Dip Molding

According to an embodiment of the present invention, the latex composition for dip molding is for performing dip molding, and may contain an emulsifier in an amount of 1.5 parts by weight to 2.5 parts by weight based on 100 parts by weight of the total solid content.

According to an embodiment of the present invention, the latex composition for dip molding includes the first carboxylic acid-modified nitrile-based copolymer latex and the second carboxylic acid-modified nitrile-based copolymer latex, wherein the first carboxylic acid-modified nitrile-based copolymer latex and the second carboxylic acid-modified nitrile-based copolymer latex may have a weight ratio of 1.00: 0.20 to 1.25, 1.00: 0.25 to 1.00, 1.0: 0.3 to 1.0, or 1.0: 0.6 to 1.0. If the weight ratio is within the range, the emulsifier content of the latex composition for dip molding is controlled as described above, so that the molded product manufacturing workability and tensile properties may be excellent while having a reduced emulsifier content.

According to an embodiment of the present invention, the latex composition for dip molding may include a crosslinking agent composition for controlling pH and inducing crosslinking during dip molding.

According to an embodiment of the present invention, the crosslinking agent composition may be for forming a crosslinking part derived from the crosslinking agent through a crosslinking reaction for the carboxylic acid-modified nitrile-based copolymer.

According to an embodiment of the present invention, the crosslinking agent composition may include a vulcanizing agent and a vulcanizing accelerator, and more specifically, may include a vulcanizing agent, a vulcanizing accelerator, and zinc oxide.

According to an embodiment of the present invention, the vulcanizing agent is for vulcanizing the latex composition for dip molding, and may be sulfur, and specific examples thereof may include sulfur such as powdered sulfur, precipitated sulfur, colloidal sulfur, surface-treated sulfur, and insoluble sulfur. The content of the vulcanizing agent may be 0.1 parts by weight to 10 parts by weight, or 1 part by weight to 5 parts by weight based on 100 parts by weight (based on solid content) of the total content of the first and second carboxylic acid-modified nitrile-based copolymer latexes in the latex composition for dip molding, and within this range, excellent crosslinking ability by vulcanization is effective.

According to an embodiment of the present invention, the vulcanizing accelerator may be one or more selected from the group consisting of 2-mercaptobenzothiazole (MBT), 2,2-dithiobisbenzothiazole-2-sulfenamide (MBTS), N-cyclohexylbenzothiasole-2-sulfenamide (CBS), 2-morpholinothiobenzothiazole (MBS), tetramethylthiuram monosulfide (TMTM), tetramethylthiuram disulfide (TMTD), zinc diethyldithiocarbamate (ZDEC) and zinc di-n-butyldithiocarbamate (ZDBC). The content of the vulcanizing accelerator may be 0.1 parts by weight to 10 parts by weight, or 0.5 parts by weight to 5 parts by weight based on 100 parts by weight (based on solid content) of the total content of the first and second carboxylic acid-modified nitrile-based copolymer latexes in the latex composition for dip molding, and excellent crosslinking ability by vulcanization is effective within this range.

According to an embodiment of the present invention, the zinc oxide may be a crosslinking agent for forming a crosslinked part through ionic bonding within the carboxylic acid-modified nitrile-based copolymer or between carboxylic acid-modified nitrile-based copolymers by performing ionic bonding with a carboxyl group of the carboxylic acid-modified nitrile-based copolymer in the latex composition for dip molding. The content of the zinc oxide may be 0.1 parts by weight to 5 parts by weight, or 0.5 parts by weight to 4 parts by weight based on 100 parts by weight (based on solid content) of the total content of the first and second carboxylic acid-modified nitrile-based copolymer latexes in the latex composition for dip molding, and within this range, the crosslinking ability is excellent, the latex stability is excellent, and the tensile strength and flexibility of the manufactured molded product are excellent.

According to an embodiment of the present invention, the latex composition for dip molding may have a solid content (concentration) of 5 wt% to 40 wt%, 8 wt% to 35 wt%, or 10 wt% to 33 wt%, and within this range, the latex transport efficiency is excellent, and the latex viscosity is prevented from increasing, resulting in excellent storage stability.

According to an embodiment of the present invention, the latex composition for dip molding may have a pH of 8 to 12, 9 to 11, or 9.5 to 10.5 at 25°C, and within this range, excellent processability and productivity when manufacturing a dip molded product may be achieved. The pH of the latex composition for dip molding may be adjusted by adding a pH adjusting agent described above.

According to an embodiment of the present invention, the latex composition for dip molding may further include additives such as a pigment including titanium dioxide, a filler including silica, a thickener, a pH adjusting agent and the like, as needed.

## Method for Preparing Latex Composition for Dip Molding

The present invention provides a method for preparing the latex composition for dip molding.

The method for preparing the latex for dip molding according to an embodiment of the present invention includes a step of mixing a first carboxylic acid-modified nitrile-based copolymer latex including a first conjugated diene-based monomer unit, a first ethylenically unsaturated nitrile-based monomer unit, and a first ethylenically unsaturated acid monomer unit, and a second carboxylic acid-modified nitrile-based copolymer latex including a second carboxylic acid-modified nitrile-based copolymer containing a second conjugated diene-based monomer unit and a second ethylenically unsaturated nitrile-based monomer unit, and an alkaline water-soluble resin unit, wherein the second carboxylic acid-modified nitrile-based copolymer latex may be prepared by mixing the second conjugated diene-based monomer, the second ethylenically unsaturated nitrile-based monomer, and the alkaline water-soluble resin solution and performing emulsion polymerization.

According to an embodiment of the present invention, the first carboxylic acid-modified nitrile-based copolymer latex and the second carboxylic acid-modified nitrile-based copolymer latex may be mixed in a weight ratio of 1.00: 0.20 to 1.25, 1.00: 0.25 to 1.00, 1.0: 0.3 to 1.0, or 1.0: 0.6 to 1.0, and within this range, a latex composition for dip molding having excellent manufacturing workability of a molded product while reducing the emulsifier content may be obtained.

Meanwhile, the first carboxylic acid-modified nitrile-based copolymer latex and the second carboxylic acid-modified nitrile-based copolymer latex may be prepared through common emulsion polymerization, and will be described in more detail below.

*Method for Preparing First Carboxylic Acid-modified Nitrile-based Copolymer Latex*

According to an embodiment of the present invention, the first carboxylic acid-modified nitrile-based copolymer latex may be prepared by emulsion polymerizing a first conjugated diene-based monomer, a first ethylenically unsaturated nitrile-based monomer, and a first ethylenically unsaturated acid monomer in a solvent, wherein the amount of each monomer used may be appropriately adjusted to an amount that allows each monomer unit to satisfy the above-mentioned range in the first carboxylic acid-modified nitrile-based copolymer latex.

According to an embodiment of the present invention, the solvent, the first conjugated diene-based monomer, the first ethylenically unsaturated nitrile-based monomer, and the first ethylenically unsaturated acid monomer may be the same as those described above.

Specifically, the first carboxylic acid-modified nitrile-based copolymer latex may be prepared by emulsion polymerizing 35 wt% to 78 wt% of the first conjugated diene-based monomer; 20 wt% to 50 wt% of the first ethylenically unsaturated nitrile-based monomer; and 0.1 wt% to 10 wt% of the first ethylenically unsaturated acid monomer in a solvent.

According to an embodiment of the present invention, the emulsion polymerization may be performed in the presence of one or more additives selected from an emulsifier, a molecular weight regulator, and a polymerization initiator, and the emulsifier may be one or more selected from the group consisting of an anionic surfactant, a nonionic surfactant, a cationic surfactant, and an amphoteric surfactant, and specifically, one or more anionic surfactants selected from the group consisting of an alkylbenzene sulfonate, an aliphatic sulfonate, a higher alcohol sulfate ester salt, an a-olefin sulfonate, and an alkyl ether sulfate ester salt.

According to an embodiment of the present invention, in the emulsion polymerization for preparing the first carboxylic acid-modified nitrile-based copolymer latex, the emulsifier may be used in an amount of 1.0 part by weight to 5.0 parts by weight based on 100 parts by weight of the total monomer content, and specifically, the emulsifier may be injected in an amount of 1.0 part by weight or more, 1.5 parts by weight or more, 2.0 parts by weight or more, or 2.5 parts by weight or more, and further, may be injected in an amount of 5.0 parts by weight or less, 4.5 parts by weight or less, 4.0 parts by weight or less, 3.5 parts by weight or less, 3.0 parts by weight or less, or 2.5 parts by weight or less, and within this range, the polymerization stability may be further improved.

According to an embodiment of the present invention, the emulsion polymerization for preparing the first carboxylic acid-modified nitrile-based copolymer latex may be performed in the presence of a molecular weight regulator, and the molecular weight regulator may be one or more selected from the group consisting of an a-methylstyrene dimer; mercaptans such as t-dodecyl mercaptan, n-dodecyl mercaptan, and octyl mercaptan; halogenated hydrocarbons such as carbon tetrachloride, methylene chloride, and methylene bromide; and sulfur-containing compounds such as tetraethyl thiuram disulfide, dipentamethylene thiuram disulfide, and diisopropyl xanthogen disulfide, and a specific example thereof may be t-dodecyl mercaptan.

According to an embodiment of the present invention, the emulsion polymerization for preparing the first carboxylic acid-modified nitrile-based copolymer latex may be performed by adding a molecular weight regulator in an amount of 0.8 parts by weight to 8.0 parts by weight based on 100 parts by weight of the total monomer content, and specifically, by adding in an amount of 0.8 parts by weight or more, 0.9 parts by weight or more, 1.0 part by weight or m ore, 1.5 parts by weight or more, 2.0 parts by weight or more, 2.5 parts by weight or more, 3.0 parts by weight or more, or 3.5 parts by weight or more, and further, by adding in an amount of 8.0 parts by weight or less, 7.5 parts by weight or less, 7.0 parts by weight or less, 6.5 parts by weight or less, 6.0 parts by weight or less, 5.5 parts by weight or less, 5.0 parts by weight or less, 4.5 parts by weight or less, 4.0 parts by weight or less, or 3.5 parts by weight or less, and within this range, the molecular weight of the polymer may be appropriately controlled, it is possible to prevent the latex stability from being lowered due to an increase in viscosity, and at the same time, to improve the entanglement between the polymer and the carboxylic acid-modified nitrile-based copolymer, thereby further improving the mechanical properties such as tensile properties of a molded product molded from the latex composition for dip molding.

According to an embodiment of the present invention, the emulsion polymerization for preparing the first carboxylic acid-modified nitrile-based copolymer latex may be initiated by injecting a polymerization initiator, and the polymerization initiator may be a radical initiator, specifically, one or more selected from the group consisting of inorganic peroxides such as sodium persulfate, potassium persulfate, ammonium persulfate, potassium perphosphate, and hydrogen peroxide; organic peroxides such as t-butyl peroxide, cumene hydroperoxide, p-menthane hydroperoxide, di-t-butyl peroxide, t-butylcumyl peroxide, acetyl peroxide, isobutyl peroxide, octanoyl peroxide, dibenzoyl peroxide, 3,5,5-trimethylhexanol peroxide, and t-butyl peroxy isobutyrate; nitrogen compounds such as azobisisobutyronitrile, azobis-2,4-dimethylvalero nitrile, azobiscyclohexanecarbonitrile, and methyl azobisisobutyrate, and a specific example thereof may be an inorganic peroxide, and a more specific example thereof may be a persulfate.

According to an embodiment of the present invention, the emulsion polymerization for preparing the first carboxylic acid-modified nitrile-based copolymer latex may be performed by adding a polymerization initiator in an amount of 0.01 parts by weight to 2.0 parts by weight based on 100 parts by weight of the total monomer content, and specifically, in an amount of 0.01 parts by weight or more, 0.05 parts by weight or more, 0.1 parts by weight or more, 0.2 parts by weight or more, 0.3 parts by weight or more, 0.4 parts by weight or more, 0.5 parts by weight or more, 0.6 parts by weight or more, 0.7 parts by weight or more, 0.8 parts by weight or more, 0.9 parts by weight or more, or 1.0 part by weight or more, and 2.0 parts by weight or less, 1.9 parts by weight or less, 1.8 parts by weight or less, 1.7 parts by weight or less, 1.6 parts by weight or less, 1.5 parts by weight or less, 1.4 parts by weight or less, 1.3 parts by weight or less, 1.2 parts by weight or less, 1.1 parts by weight or less, or 1.0 part by weight or less, and the polymerization rate may be maintained at an appropriate level within this range.

In addition, according to an embodiment of the present invention, a deodorizing step may be carried out to remove unreacted monomers and residual components as needed after the emulsion polymerization.

_Method for Preparing Second Carboxylic Acid-Modified Nitrile-based Copolymer Latex_

According to an embodiment of the present invention, the second carboxylic acid-modified nitrile-based copolymer latex may be prepared by emulsion polymerizing a second conjugated diene-based monomer, a second ethylenically unsaturated nitrile-based monomer, and an alkaline water-soluble resin solution in a solvent, wherein the amount of each monomer and the alkaline water-soluble resin solution used may be appropriately adjusted to an amount in which each unit in the second carboxylic acid-modified nitrile-based copolymer latex may satisfy the above-mentioned range.

According to an embodiment of the present invention, the solvent, the second conjugated diene-based monomer, and the second ethylenically unsaturated nitrile-based monomer may be the same as those described above.

Specifically, the second carboxylic acid-modified nitrile-based copolymer latex may be prepared by emulsion polymerizing a second conjugated diene-based monomer; a second ethylenically unsaturated nitrile-based monomer; and an alkaline water-soluble resin solution in a solvent, wherein the alkaline water-soluble resin solution may be used in an amount of 5 parts by weight to 25 parts by weight based on the solid content relative to 100 parts by weight of the total amount of the second conjugated diene-based monomer and the second ethylenically unsaturated nitrile-based monomer.

According to an embodiment of the present invention, the alkaline water-soluble resin solution may be injected in batch together with the second conjugated diene-based monomer and the second ethylenically unsaturated nitrile-based monomer before the initiation of emulsion polymerization.

In addition, according to an embodiment of the present invention, the alkaline water-soluble resin solution may be injected at least twice, before the initiation of emulsion polymerization and after the initiation and during polymerization, and in another embodiment, the alkaline water-soluble resin solution may be first injected before the initiation of emulsion polymerization, and second injected after initiation of emulsion polymerization, and the second injection may be performed continuously during a polymerization conversion ratio of 30% to 70%. In this case, if the alkaline water-soluble resin solution is injected in installments, the total injected alkaline water-soluble resin solution may be 5 parts by weight to 25 parts by weight based on the solid content, relative to 100 parts by weight of the total amount of the conjugated diene-based monomer and the ethylenically unsaturated nitrile-based monomer.

According to an embodiment of the present invention, the alkaline water-soluble resin solution may be first injected before the initiation of emulsion polymerization, and second injected after the initiation of emulsion polymerization, and the second injection may be continuously performed during a polymerization conversion ratio of 30% to 70%. The alkaline water-soluble resin solution at the first injection and the alkaline water-soluble resin solution at the second injection may have a weight ratio of 1: 0.2 to 1 based on the solid content. Meanwhile, if the alkaline water-soluble resin solution is injected in installments to perform emulsion polymerization, there is an effect that the polymerization stability may be further improved.

According to an embodiment of the present invention, the polymerization conversion ratio may be obtained by collecting a certain amount of a sample from a composition undergoing a reaction at certain time intervals, measuring the solid content in the sample, and then calculating using Mathematical Equation 1 below.

[Mathematical Equation 11 Polymerization conversion ratio (%) = $[(Ms - Mo)/(Mp - M'o)]$ x 100

[Mathematical Equation 1]

In Mathematical Equation 1 above, Ms is the weight of a dried copolymer, Mo is the sum of the weights of the emulsifier and the polymerization initiator, Mp is the weight of a 100% polymerized copolymer, and M'o is the sum of the weights of the emulsifier and the polymerization initiator.

According to an embodiment of the present invention, the alkaline water-soluble resin solution may have a pH of 7.0 to 10.0 at 25°C. In a specific example, the alkaline water-soluble resin solution may have a pH at 25°C of 7.0 or more, 7.1 or more, 7.2 or more, 7.3 or more, 7.4 or more, 7.5 or more, 7.6 or more, 7.7 or more, 7.8 or more, 7.9 or more, or 8.0 or more, and 10.0 or less, 9.9 or less, 9.8 or less, 9.7 or less, 9.6 or less, 9.5 or less, 9.4 or less, 9.3 or less, 9.2 or less, 9.1 or less, or 9.0 or less, and within this range, the alkaline water-soluble resin solution may act more effectively as a polymerization stabilizer when preparing the second carboxylic acid-modified nitrile-based copolymer latex, thereby improving latex stability.

According to an embodiment of the present invention, the emulsion polymerization may be carried out in the absence of an emulsifier, and, if necessary, may be carried out in the presence of one or more additives selected from an emulsifier, a molecular weight regulator, and a polymerization initiator. The second carboxylic acid-modified nitrile-based copolymer latex may stably achieve polymerization even in the absence of an emulsifier or in the presence of a reduced emulsifier, since the alkaline water-soluble resin solution may act as a polymerization stabilizer like an emulsifier.

According to an embodiment of the present invention, the emulsifier, the molecular weight regulator, and the polymerization initiator may be the same as those described above.

According to an embodiment of the present invention, if an emulsifier is used in the emulsion polymerization for preparing the second carboxylic acid-modified nitrile-based copolymer latex, the emulsifier may be used in an amount of 0.3 parts by weight to 2.0 parts by weight based on 100 parts by weight of the total solid content of the monomers constituting the second carboxylic acid-modified nitrile-based copolymer, for example, the second conjugated diene-based monomer and the second ethylenically unsaturated nitrile-based monomer or the second carboxylic acid-modified nitrile-based copolymer, and specifically, the emulsifier may be injected in an amount of 0.3 parts by weight or more, 0.4 parts by weight or more, 0.5 parts by weight or more, or 0.6 parts by weight or more, and may be injected in an amount of 2.0 parts by weight or less, 1.8 parts by weight or less, 1.6 parts by weight or less, 1.4 parts by weight or less, 1.2 parts by weight or less, or 1.0 part by weight or less, and within this range, the polymerization stability may be further improved.

According to an embodiment of the present invention, the emulsion polymerization for preparing the second carboxylic acid-modified nitrile-based copolymer latex may be performed by adding the molecular weight regulator in an amount of 0.8 parts by weight to 8.0 parts by weight based on 100 parts by weight of the total monomer content, and specifically, 0.8 parts by weight or more, 0.9 parts by weight or more, 1.0 part by weight or more, 1.5 parts by weight or more, 2.0 parts by weight or more, 2.5 parts by weight or more, 3.0 parts by weight or more, or 3.5 parts by weight or more, and 8.5 parts by weight or less, 8.0 parts by weight or less, 7.5 parts by weight or less, 7.0 parts by weight or less, 6.5 parts by weight or less, 6.0 parts by weight or less, 5.5 parts by weight or less, 5.0 parts by weight or less, 4.5 parts by weight or less, or 4.0 parts by weight or less, and within this range, the molecular weight of the polymer may be adjusted appropriately, and it is possible to prevent the latex stability from deteriorating due to an increase in viscosity.

According to an embodiment of the present invention, the emulsion polymerization for preparing the second carboxylic acid-modified nitrile-based copolymer latex may be performed by adding the polymerization initiator in an amount of 0.01 parts by weight to 2.0 parts by weight based on 100 parts by weight of the total monomer content, and specifically, may be added in 0.01 parts by weight or more, 0.05 parts by weight or more, 0.1 parts by weight or more, 0.2 parts by weight or more, 0.3 parts by weight or more, 0.4 parts by weight or more, 0.5 parts by weight or more, 0.6 parts by weight or more, 0.7 parts by weight or more, 0.8 parts by weight or more, 0.9 parts by weight or more, or 1.0 part by weight or more, and 2.0 parts by weight or less, 1.9 parts by weight or less, 1.8 parts by weight or less, 1.7 parts by weight or less, 1.6 parts by weight or less, 1.5 parts by weight or less, 1.4 parts by weight or less, 1.3 parts by weight or less, 1.2 parts by weight or less, 1.1 parts by weight or less, or 1.0 part by weight or less, and within this range, the polymerization rate may be maintained at an appropriate level.

In addition, according to an embodiment of the present invention, a deodorizing step may be performed to remove unreacted monomers and residual components as needed after the emulsion polymerization.

Meanwhile, according to an embodiment of the present invention, the alkaline water-soluble resin solution may be prepared by a preparation method including a step (S10) of preparing a polymer latex by emulsion polymerizing a third conjugated diene-based monomer, a third ethylenically unsaturated nitrile-based monomer, and a third ethylenically unsaturated acid monomer in a solvent; and a step (S20) of adding a pH adjusting agent to the polymer latex.

According to an embodiment of the present invention, the solvent, the third conjugated diene-based monomer, the third ethylenically unsaturated nitrile-based monomer, and the third ethylenically unsaturated acid monomer may be the same as those described above.

According to an embodiment of the present invention, step (S10) is a step for preparing a polymer latex, which may be performed by emulsion polymerization, and in this case, the emulsion polymerization may be performed in the presence of an emulsifier and a molecular weight regulator. In addition, the emulsifier and the molecular weight regulator may be the same as those described above.

According to an embodiment of the present invention, the emulsion polymerization in step (S10) may be performed by adding the emulsifier in an amount of 1.0 part by weight to 5.0 parts by weight based on 100 parts by weight of the total monomer content, and specifically, the emulsifier may be added in an amount of 1.0 part by weight or more, 1.5 parts by weight or more, 2.0 parts by weight or more, or 2.5 parts by weight or more, and may be added in an amount of 5.0 parts by weight or less, 4.5 parts by weight or less, 4.0 parts by weight or less, 3.5 parts by weight or less, 3.0 parts by weight or less, or 2.5 parts by weight or less, and within this range, the polymerization stability may be further improved.

According to an embodiment of the present invention, the emulsion polymerization in step (S10) may be performed by adding the molecular weight regulator in an amount of 0.8 parts by weight to 8.0 parts by weight based on 100 parts by weight of the total monomer content, and specifically, may be performed by adding in an amount of 0.8 parts by weight or more, 0.9 parts by weight or more, 1.0 part by weight or more, 1.5 parts by weight or more, 2.0 parts by weight or more, 2.5 parts by weight or more, 3.0 parts by weight or more, or 3.5 parts by weight or more, and may be performed by adding in an amount of 8.0 parts by weight or less, 7.5 parts by weight or less, 7.0 parts by weight or less, 6.5 parts by weight or less, 6.0 parts by weight or less, 5.5 parts by weight or less, 5.0 parts by weight or less, 4.5 parts by weight or less, 4.0 parts by weight or less, or 3.5 parts by weight or less, and by appropriately adjusting the molecular weight of the polymer within this range, the deterioration of latex stability due to an increase in viscosity may be prevented.

According to an embodiment of the present invention, the emulsion polymerization in step (S10) may be initiated by injecting a polymerization initiator, and the polymerization initiator may be a radical initiator. In this case, the polymerization initiator may be the same as described above.

According to an embodiment of the present invention, the emulsion polymerization in step (S10) may be performed by injecting the polymerization initiator in an amount of 0.01 parts by weight to 2.0 parts by weight based on 100 parts by weight of the total monomer content, and specifically, may be performed by injecting in an amount of 0.01 parts by weight or more, 0.05 parts by weight or more, 0.1 parts by weight or more, 0.2 parts by weight or more, 0.3 parts by weight or more, 0.4 parts by weight or more, 0.5 parts by weight or more, 0.6 parts by weight or more, 0.7 parts by weight or more, 0.8 parts by weight or more, 0.9 parts by weight or more, or 1.0 part by weight or more, and may be performed by injecting in an amount of 2.0 parts by weight or less, 1.9 parts by weight or less, 1.8 parts by weight or less, 1.7 parts by weight or less, 1.6 parts by weight or less, 1.5 parts by weight or less, 1.4 parts by weight or less, 1.3 parts by weight or less, 1.2 parts by weight or less, 1.1 parts by weight or less, or 1.0 part by weight or less, and the polymerization rate may be maintained at an appropriate level within this range.

According to an embodiment of the present invention, step (S20) is a step for adjusting the pH of the polymer latex prepared in step (S10), thereby adjusting the pH of the alkaline water-soluble resin solution finally obtained at 25°C to 7.0 to 10.0. In this case, the pH adjusting agent may be a basic compound, and a specific example may include an alkaline hydroxide salt and/or an ammonia aqueous solution, and a more specific example may include sodium hydroxide or potassium hydroxide.

In addition, according to an embodiment of the present invention, after step (S20), a deodorizing step may be performed to remove unreacted monomers and residual components as needed.

## Molded Product

The present invention provides a dip molded product manufactured by dip molding the latex composition for dip molding.

According to an embodiment of the present invention, the molded product may include a layer derived from the latex composition for dip molding. The molded product may be a dip molded product manufactured by dip molding the latex composition for dip molding, and may be a molded product including a layer derived from a latex composition for dip molding formed from the latex composition for dip molding by dip molding. A molded product manufacturing method for molding the molded product may include a step of immersing the latex composition for dip molding by a direct immersion method, an anode adhesion immersion method, a Teague adhesion immersion method or the like, and specifically, by an anode adhesion immersion method, and in this case, there is an advantage of obtaining a dip molded product having a uniform thickness.

According to an embodiment of the present invention, the molded product manufacturing method includes a step of attaching a coagulant to a dip mold frame (S100); a step of immersing the dip mold frame to which the coagulant is attached in a latex composition for dip molding to form a layer derived from a latex composition for dip molding, that is, a dip molding layer (S200); and a step (S300) of heating the dip molding layer to crosslink the latex composition for dip molding.

According to an embodiment of the present invention, step (S100) is a step of immersing the dip mold frame in a coagulant solution to attach the coagulant to the surface of the dip mold frame to form a coagulant in the dip mold frame, wherein the coagulant solution is a solution in which the coagulant is dissolved in water, alcohol, or a mixture thereof, and the content of the coagulant in the coagulant solution may be 5 wt% to 75 wt%, 5 wt% to 50 wt%, or 10 wt% to 40 wt% based on the total content of the coagulant solution. The coagulant may be one or more selected from the group consisting of metal halides such as barium chloride, calcium chloride, magnesium chloride, zinc chloride, and aluminum chloride;

nitrates such as barium nitrate, calcium nitrate, and zinc nitrate; acetates such as barium acetate, calcium acetate, and zinc acetate; and sulfates such as calcium sulfate, magnesium sulfate, and aluminum sulfate, and specifically, calcium chloride or calcium nitrate. In addition, according to an embodiment of the present invention, step (S100) may further include to attach a coagulant to the dip mold frame, a step of immersing the dip mold frame in a coagulant solution for 5 seconds or longer, taking the dip mold frame out, and drying at 50°C to 150°C.

According to an embodiment of the present invention, step (S200) may be a step of immersing the dip mold frame to which the coagulant is attached in order to form a dip molding layer in the latex composition for dip molding according to the present invention, taking the dip mold frame out to form a dip molding layer on the dip molding frame. In addition, according to an embodiment of the present invention, step (S200) may perform the immersion for 5 seconds or longer to form a dip molding layer on the dip mold frame.

According to an embodiment of the present invention, step (S300) may be a step of heating the dip molding layer formed on the dip mold frame to evaporate a liquid component and crosslinking and hardening the latex composition for dip molding in order to obtain a dip molded product. In this case, if the latex composition for dip molding according to the present invention is used, crosslinking by vulcanization and/or ionic bonding of a crosslinking agent composition included in the latex composition for dip molding may be performed. In addition, according to an embodiment of the present invention, the heating may be performed by first heating at 70°C to 150°C for 1 minute to 10 minutes and then second heating at 100°C to 180°C for 5 minutes to 30 minutes. In this case, after the first heating and before performing the second heating, a process of leaching by soaking in water or warm water for 10 seconds to 10 minutes may be further included.

According to an embodiment of the present invention, the molded product may be a glove including a surgical glove, an examination glove, an industrial glove and a household glove, a condom, a catheter, or a health care product.

Hereinafter, examples of the present invention will be described in detail so that those skilled in the art may easily implement the present invention. However, the present invention may be achieved in various different forms and is not limited to the examples described herein.

## Examples and Comparative Examples

### Example 1

<Preparation of First Carboxylic Acid-modified Nitrile-based Copolymer Latex>.

A 10 L high-pressure reactor equipped with a thermometer, a cooler, a nitrogen gas inlet, and an inlet capable of continuously injecting a monomer, an emulsifier, and a polymerization initiator was used. After the 10 L high-pressure reactor was replaced with nitrogen, 27 wt% of acrylonitrile, 67 wt% of 1,3-butadiene, 6 wt% of methacrylic acid, and based on 100 parts by weight of a monomer mixture composed of the acrylonitrile, 1,3-butadiene and methacrylic acid, 2.8 parts by weight of sodium alkylbenzene sulfonate as an emulsifier, 0.7 parts by weight of t-dodecyl mercaptan as a molecular weight regulator, and 150 parts by weight of ion-exchanged water were injected, and the internal temperature of the reactor was increased to 40°C. After the temperature increase was completed, 1.0 part by weight of potassium persulfate as a polymerization initiator was added to initiate polymerization, and when the polymerization conversion ratio was 95%, 1.0 parts by weight of sodium dimethyldithiocarbamate was added to terminate the polymerization, thereby producing a polymer latex including a polymer. Subsequently, potassium hydroxide was added to the polymer latex to adjust the pH at 25°C to 8.5, and a deodorization process was performed to remove unreacted monomers, thereby obtaining a first carboxylic acid-modified nitrile-based copolymer latex.

<Preparation of Second Carboxylic Acid-modified Nitrile-based Copolymer Latex>

1) Preparation of Alkaline Water-soluble Resin Solution

A 10 L high-pressure reactor equipped with a thermometer, a cooler, a nitrogen gas inlet, and an inlet capable of continuously injecting a monomer, an emulsifier, and a polymerization initiator was used. After the 10 L high-pressure reactor was replaced with nitrogen, 20 wt% of acrylonitrile, 60 wt% of 1,3-butadiene, 20 wt% of methacrylic acid, based on 100 parts by weight of a monomer mixture composed of the acrylonitrile, 1,3-butadiene, and methacrylic acid, 2.5 parts by weight of sodium alkylbenzene sulfonate as an emulsifier, 4.0 parts by weight of t-dodecyl mercaptan as a molecular weight regulator, and 250 parts by weight of ion-exchanged water were added, the temperature inside the reactor was increased to 40°C. After the temperature increase was completed, 1.0 part by weight of potassium persulfate as a polymerization initiator was added to initiate polymerization, and when the polymerization conversion ratio was 95%, potassium hydroxide was added to adjust the pH at 25°C to 9.5, and a deodorization process was performed to remove unreacted monomers, thereby obtaining an alkaline water-soluble resin solution.

2) Preparation of Second Carboxylic acid-modified Nitrile-based Copolymer Latex

A 10 L high-pressure reactor equipped with a thermometer, a cooler, a nitrogen gas inlet, and an inlet capable of continuously injecting a monomer, an emulsifier, and a polymerization initiator was used. After the 10 L high-pressure reactor was replaced with nitrogen, 30 wt% of acrylonitrile, 70 wt% of 1,3-butadiene, and based on 100 parts by weight of a monomer mixture composed of the acrylonitrile and 1,3-butadiene, 15 parts by weight (based on solid content) of the alkaline water-soluble resin solution prepared above, 0.7 parts by weight of t-dodecyl mercaptan as a molecular weight regulator, and 150 parts by weight of ion-exchanged water were added, and the internal temperature of the reactor was increased to 40°C. After the temperature increase was completed, 1.0 part by weight of potassium permanganate was added as a polymerization initiator to initiate polymerization, and 5 parts by weight (based on solid content) of the alkaline water-soluble resin solution was continuously added during the polymerization conversion ratio in a range of 30% to 70%. At a point where the polymerization conversion ratio was 95%, 1.0 part by weight of sodium dimethyldithiocarbamate was added to terminate the polymerization, thereby producing a polymer latex including the polymer. Subsequently, a deodorization process was performed to remove unreacted monomers, thereby obtaining a second carboxylic acid-modified nitrile-based copolymer latex.

<Preparation of Latex Composition for Dip Molding>

To 100 parts by weight (based on solid content) of the first carboxylic acid-modified nitrile-based copolymer latex and the second carboxylic acid-modified nitrile-based copolymer latex prepared above, 1.2 parts by weight of a 3 wt% potassium hydroxide aqueous solution, 1.2 parts by weight of a vulcanizing agent (Akron dispersions Co., BOSTEX 378), 0.7 parts by weight of a vulcanizing accelerator (Akron dispersions Co., BOSTEX 497B), 1.0 part by weight of zinc oxide (Akron dispersions Co., BOSTEX 422), 1.0 part by weight of titanium dioxide (Akron dispersions Co., BOSTEX 497D), and double-distilled water were added to prepare a latex composition for dip molding having a solid content of 25 wt%, and ammonia was added to prepare a latex composition for dip molding having a pH of 10 at 25°C. In this case, the first carboxylic acid-modified nitrile-based copolymer latex and the second carboxylic acid-modified nitrile-based copolymer latex were mixed at a weight ratio of 80:20 (4:1).

<Manufacture of Dip Molded Product>

18 wt% of calcium nitrate, 81.9 wt% of water, and 0.1 wt% of a wetting agent (Huntsman Corporation, Australia, product name Teric 320) were mixed to prepare a coagulant solution. A hand-shaped ceramic mold was immersed in the coagulant solution for 10 seconds, taken out, and dried at 80°C for 4 minutes to apply the coagulant to the hand-shaped mold.

Subsequently, the hand-shaped mold to which the coagulant was applied was immersed in the obtained latex composition for dip molding for 10 seconds, taken out, dried at 80°C for 2 minutes, and leached in water for 30 seconds. Again, after crosslinking the mold at 110°C for 20 minutes, the crosslinked dip molding layer was peeled off from the hand-shaped mold to obtain a glove-shaped dip molded product.

**Example 2**

The same procedure as in Example 1 was performed to prepare a latex composition for dip molding except that the first carboxylic acid-modified nitrile-based copolymer latex and the second carboxylic acid-modified nitrile-based copolymer latex were mixed in a weight ratio of 70:30 (about 2.3:1) during preparing a latex composition for dip molding, in Example 1, and a dip molded product was obtained using the same.

**Example 3**

The same procedure as in Example 1 was performed to prepare a latex composition for dip molding except that the first carboxylic acid-modified nitrile-based copolymer latex and the second carboxylic acid-modified nitrile-based copolymer latex were mixed in a weight ratio of 60:40 (about 1.5:1) during preparing a latex composition for dip molding, in Example 1, and a dip molded product was obtained using the same.

**Example 4**

The same procedure as in Example 1 was performed to prepare a latex composition for dip molding except that the first carboxylic acid-modified nitrile-based copolymer latex and the second carboxylic acid-modified nitrile-based copolymer latex were mixed in a weight ratio of 50:50 (about 1:1) during preparing a latex composition for dip molding, in Example 1, and a dip molded product was obtained using the same.

**Example 5**

The same procedure as in Example 1 was performed to prepare a latex composition for dip molding except that the first carboxylic acid-modified nitrile-based copolymer latex and the second carboxylic acid-modified nitrile-based copolymer latex were mixed in a weight ratio of 90:10 (about 9:1) during preparing a latex composition for dip molding, in Example 1, and a dip molded product was obtained using the same.

**Example 6**

The same procedure as in Example 1 was performed to prepare a latex composition for dip molding except that the first carboxylic acid-modified nitrile-based copolymer latex and the second carboxylic acid-modified nitrile-based copolymer latex were mixed in a weight ratio of 40:60 (about 1:1.5) during preparing a latex composition for dip molding, in Example 1, and a dip molded product was obtained using the same.

**Comparative Example 1**

The same procedure as in Example 1 was performed to prepare a latex composition for dip molding except that the second carboxylic acid-modified nitrile-based copolymer latex was not mixed in the preparation of the latex composition for dip molding, and 100 parts by weight of the first carboxylic acid-modified nitrile-based copolymer latex was used, and a dip molded product was obtained using the same.

**Comparative Example 2**

The same procedure as in Example 1 was performed to prepare a latex composition for dip molding except that the second carboxylic acid-modified nitrile-based copolymer latex was not mixed in the preparation of the latex composition for dip molding, 100 parts by weight of the first carboxylic acid-modified nitrile-based copolymer latex was used, and 2.2 parts by weight of the emulsifier was used during preparing the first carboxylic acid-modified nitrile-based copolymer latex, and a dip molded product was obtained using the same.

**Comparative Example 3**

<Preparation of Carboxylic Acid-modified Nitrile-based Copolymer Latex>

A 10 L high-pressure reactor equipped with a thermometer, a cooler, a nitrogen gas inlet, and an inlet capable of continuously injecting a monomer, an emulsifier, and a polymerization initiator was used. After the 10 L high-pressure reactor was replaced with nitrogen, 27 wt% of acrylonitrile, 67 wt% of 1,3-butadiene, 6 wt% of methacrylic acid, and based on 100 parts by weight of a monomer mixture composed of the acrylonitrile, 1,3-butadiene, and methacrylic acid, 2.8 parts by weight of sodium alkylbenzene sulfonate as an emulsifier, 0.7 parts by weight of t-dodecyl mercaptan as a molecular weight regulator, and 150 parts by weight of ion-exchanged water were added, and the internal temperature of the reactor was increased to 40°C. After the temperature increase was completed, 1.0 part by weight of potassium persulfate as a polymerization initiator was added to initiate polymerization, and at a point where the polymerization conversion ratio was 95%, 1.0 part by weight of sodium dimethyldithiocarbamate was added to terminate the polymerization, thereby producing a polymer latex containing the polymer. Subsequently, potassium hydroxide was added to the polymer latex to adjust the pH at 25°C to 8.5, and a deodorization process was performed to remove unreacted monomers, thereby obtaining a carboxylic acid-modified nitrile-based copolymer latex.

<Preparation of Alkaline Water-soluble Resin Solution>

A 10 L high-pressure reactor equipped with a thermometer, a cooler, a nitrogen gas inlet, and an inlet capable of continuously injecting a monomer, an emulsifier, and a polymerization initiator was used. After the 10 L high-pressure reactor was replaced with nitrogen, 20 wt% of acrylonitrile, 60 wt% of 1,3-butadiene, and 20 wt% of methacrylic acid, and based on 100 parts by weight of a monomer mixture composed of the acrylonitrile, 1,3-butadiene, and methacrylic acid, 2.5 parts by weight of sodium alkylbenzene sulfonate as an emulsifier, 4.0 parts by weight of t-dodecyl mercaptan as a molecular weight regulator, and 250 parts by weight of ion-exchanged water were added, and the temperature inside the reactor was increased to 40°C. After the temperature increase was completed, 1.0 part by weight of potassium persulfate as a polymerization initiator was added to initiate polymerization, and at a point where the polymerization conversion ratio was 95%, potassium hydroxide was added to adjust the pH at 25°C to 9.5, and a deodorization process was performed to remove unreacted monomers, thereby obtaining an alkaline water-soluble resin solution.

<Preparation of Latex Composition for Dip Molding>

To 100 parts by weight (based on solid content) of the carboxylic acid-modified nitrile-based copolymer latex prepared above, 5 parts by weight of an alkaline water-soluble resin solution, 1.2 parts by weight of a 3 wt% potassium hydroxide aqueous solution, 1.2 parts by weight of a vulcanizing agent (Akron dispersions Co., BOSTEX 378), 0.7 parts by weight of a vulcanizing accelerator (Akron dispersions Co., BOSTEX 497B), 1.0 part by weight of zinc oxide (Akron dispersions Co., BOSTEX 422), 1.0 part by weight of titanium dioxide (Akron dispersions Co., BOSTEX 497D), and double-distilled water were added to prepare a latex composition for dip molding having a solid content of 25 wt%, and ammonia was added to prepare a latex composition for dip molding having a pH of 10 at 25°C. In addition, a dip molded product was obtained by performing the same procedure as in Example 1.

**Comparative Example 4**

The same procedure as in Comparative Example 3 was performed to prepare a latex composition for dip molding except that 20 parts by weight of the alkaline water-soluble resin was mixed with 100 parts by weight of the carboxylic acid-modified nitrile-based copolymer latex during preparing the latex composition for dip molding, in Comparative Example 3, and a dip molded product was obtained using the latex composition.

**Experimental Examples**

**Experimental Example 1**

The latex stability and total emulsifier content were measured for the latex compositions for dip molding prepared in Examples 1 to 6 and Comparative Examples 1 to 4, and the results are shown in Table 1 below.

(1) Latex Stability

The latex stability was confirmed through the total coagulum content and the amount of reactor scale generated.
The total coagulum content was measured by filtering each composition through a #200 mesh sieve and measuring the weight of the filtered coagulum. The lower the weight, the better the latex stability.
The amount of reactor scale was evaluated by scoring the amount of scale generated in the reactor after completing polymerization, using a 10-point scale method, and the higher the score, the better. In this case, 10 points were given for a completely clean reaction, 9 points were given for a fine band at the reaction interface, 5 points were given for scale all over the impeller, 2 points were given for scale that made the next polymerization difficult, and 0 points were given for a completely broken latex stability.

(2) Total emulsifier content

The total emulsifier content is expressed as the sum of the total emulsifier content added until the latex composition for dip molding was prepared.

[Table 1]

| Division | Example | | | | | | Comparative Example | | | |
|---|---|---|---|---|---|---|---|---|---|---|
| | 1 | 2 | 3 | 4 | 5 | 6 | 1 | 2 | 3 | 4 |
| Total emulsifier content (parts by weight) | 2.34 | 2.11 | 1.88 | 1.65 | 2.57 | 1.42 | 2.80 | 2.20 | 2.78 | 2.74 |

(continued)

| Division | Example | | | | | | Comparative Example | | | |
|---|---|---|---|---|---|---|---|---|---|---|
| | 1 | 2 | 3 | 4 | 5 | 6 | 1 | 2 | 3 | 4 |
| Latex stability | Total coagulum content (ppm) | 32 | 35 | 28 | 21 | 32 | 25 | 30 | 1325 | 31 | 22 |
| | Reactor scale amount (10-point scale method) | 9 | 9 | 9 | 9 | 9 | 9 | 9 | 3 | 9 | 9 |

As shown in Table 1 above, it can be confirmed that Examples 1 to 6 have reduced emulsifier contents, but have total coagulum contents and reactor scale amounts that are lower or similar to those of the Comparative Examples. Specifically, Examples 1 to 6 have reduced emulsifier contents of about 50% to 90% but exhibit equivalent or higher levels of latex stability, compared to Comparative Example 1, which corresponds to a latex composition for dip molding containing only the first carboxylic acid-modified nitrile-based copolymer latex, and it was confirmed that the latex stability was significantly improved with reduced or similar emulsifier contents compared to Comparative Example 2, which corresponds to a latex composition for dip molding containing only the carboxylic acid-modified nitrile-based copolymer latex prepared by reducing the amount of an emulsifier used.

In addition, Comparative Examples 3 and 4, which correspond to latex compositions for dip molding prepared by mixing an alkaline water-soluble resin solution with a carboxylic acid-modified nitrile-based copolymer latex, had increased emulsifier contents of about 10% to 200% compared to the Examples, but the latex stability was the same or slightly improved.

**Experimental Example 2**

The dip molding workability of the latex compositions for dip molding prepared in Examples 1 to 6 and Comparative Examples 1 to 4, and the tensile strength, elongation, 500% modulus, and foam generation degree of the dip molded products were measured, and the results are shown in Table 2 below.

(1) Dip Molding Workability

Dip molding workability was evaluated by syneresis and webbing.

After applying a $CaNO_3$ solution to a cylindrical ceramic mold and drying, and dipping the same in each latex composition for dip molding, the syneresis phenomenon was measured by the time (in seconds) for water droplets to drip, produced when a film was dried in an 80°C oven. The longer the time (the longer the elapsed time), the better.

When a triangular ring was inserted into each latex composition for molding and then taken out, the webbing was measured by the time (in seconds) for a foam film formed on the ring to burst. The shorter the time (the shorter the elapsed time), the better.

(2) Tensile Strength (MPa), Elongation (%), and 500% Modulus (MPa)

The tensile strength was measured by making dumbbell-shaped test specimens using each dip molded product according to ASTM D-412. By using the test specimen, in accordance with ASTM D638, the test specimen was pulled at a crosshead speed of 500 mm/min using a Universal Testing Machine (UTM) device (Instron Co., model number: 4466), and a point where the test specimen breaks was measured. The tensile strength was calculated according to Mathematical Equation 2 below, and then converted to MPa (1 MPa = 0.10197 kgf/mm$^2$). In this time, the higher the calculated tensile strength, the better the tensile properties.

Tensile strength (kgf/mm$^2$) = load value (kgf)/(thickness (mm) x width (mm))          [Mathematical Equation 2]

The elongation was calculated by using a test specimen manufactured for the tensile strength measurement, in accordance with ASTM D638, using a Universal Testing Machine (UTM) device (Instron Co., model number: 4466) at a crosshead speed of 500 mm/min, measuring a point where the test specimen breaks, and calculating the elongation according to Mathematical Equation 3 below. In this case, the higher the calculated elongation, the better the tensile properties.

Elongation (%) = (length of test specimen after elongation/length of test specimen before elongation) x 100　　　　　　　　　　　　　　　　　　　　　　　　　　[Mathematical Equation 3]

The 500% modulus was measured using the test specimen manufactured for the tensile strength measurement, in accordance with ASTM D638, using a Universal Testing Machine (UTM) device (Instron Co., model number: 4466), at a crosshead speed of 500 mm/min, and when the test specimen was stretched 5 times compared to a length before stretching, the tensile strength of 500% modulus was measured. In this case, the lower the measured 500% modulus, the softer and more comfortable to wear.

(3) Foam Generation Degree (%)

After dripping water droplets on each dip molded product 8 times, they were rubbed together for 10 seconds to generate foam, and immediately after, a picture was taken to obtain an image, and the foam area and the total area of the molded product were obtained using an Image J program, and the calculation was made using Mathematical Equation 4 below. The smaller the number, the better.

Foam generation degree (%) = [foam area/total area of molded product] x 100.　　　　　[Mathematical Equation 4]

[Table 2]

| Division | | Example | | | | | | Comparative Example | | | |
|---|---|---|---|---|---|---|---|---|---|---|---|
| | | 1 | 2 | 3 | 4 | 5 | 6 | 1 | 2 | 3 | 4 |
| Workability | Syneresis phenome non (sec) | 160 | 182 | 180 | 245 | 12 5 | >3 00 | 130 | 62 | 142 | 251 |
| | Webbing (sec) | 12 | 5 | 1 | 1 | 21 | 1 | 26 | 7 | 32 | 45 |
| Tensile properties | Tensile strength (MPa) | 33 | 35 | 35 | 31 | 35 | 29 | 32 | 34 | 35 | 25 |
| | Elongation (%) | 635 | 657 | 650 | 601 | 64 7 | 58 7 | 625 | 630 | 645 | 691 |
| | 500% modulus (MPa | 14.8 | 13.0 | 13.2 | 15.3 | 14 .0 | 17 .2 | 14.7 | 14.3 | 14.0 | 11.0 |
| Foam generation degree (%) | | 2.0 | 1.9 | 0.8 | 0.1 | 3. 9 | 0. 2 | 4.2 | 1.8 | 4.3 | 4.7 |

As shown in Table 2 above, it was confirmed that the dip molded products of Examples 1 to 6 had significantly improved workability and greatly reduced foam generation while having tensile properties that were at least as good as those of Comparative Examples 1 to 4.

**Claims**

1. A latex composition for dip molding, the latex composition comprising:

　　a first carboxylic acid-modified nitrile-based copolymer latex comprising a first carboxylic acid-modified nitrile-based copolymer comprising: a first conjugated diene-based monomer unit; a first ethylenically unsaturated nitrile-based monomer unit; and a first ethylenically unsaturated acid monomer unit; and
　　a second carboxylic acid-modified nitrile-based copolymer latex comprising a second carboxylic acid-modified nitrile-based copolymer comprising a second conjugated diene-based monomer unit and a second ethylenically unsaturated nitrile-based monomer unit, and an alkaline water-soluble resin unit, wherein
　　the alkaline water-soluble resin comprises a third conjugated diene-based monomer unit, a third ethylenically unsaturated nitrile-based monomer unit and a third ethylenically unsaturated acid monomer unit.

2. The latex composition for dip molding according to claim 1, wherein the first carboxylic acid-modified nitrile-based copolymer latex and the second carboxylic acid-modified nitrile-based copolymer latex have a weight ratio of 1.00:

0.20 to 1.25.

3. The latex composition for dip molding according to claim 1, wherein the first carboxylic acid-modified nitrile-based copolymer comprises: 35 wt% to 78 wt% of the first conjugated diene-based monomer unit; 20 wt% to 50 wt% of the first ethylenically unsaturated nitrile-based monomer unit; and 0.1 wt% to 10 wt% of the first ethylenically unsaturated acid monomer unit.

4. The latex composition for dip molding according to claim 1, wherein the second carboxylic acid-modified nitrile-based copolymer comprises: 60 wt% to 80 wt% of the second conjugated diene-based monomer unit; and 20 wt% to 40 wt% of the second ethylenically unsaturated nitrile-based monomer unit.

5. The latex composition for dip molding according to claim 1, wherein the second carboxylic acid-modified nitrile-based copolymer latex comprises 5 parts by weight to 25 parts by weight of the alkaline water-soluble resin unit with respect to 100 parts by weight of the second carboxylic acid-modified nitrile-based copolymer.

6. The latex composition for dip molding according to claim 1, wherein the alkaline water-soluble resin comprises: 40 wt% to 75 wt% of a third conjugated diene-based monomer unit; 10 wt% to 50 wt% of a third ethylenically unsaturated nitrile-based monomer unit; and 10 wt% to 50 wt% of a third ethylenically unsaturated acid monomer unit.

7. The latex composition for dip molding according to claim 1, wherein

the second carboxylic acid-modified nitrile-based copolymer latex has a micelle form,
the micelle is formed from the alkaline water-soluble resin unit, and
the micelle comprises the second carboxylic acid-modified nitrile-based copolymer inside thereof.

8. The latex composition for dip molding according to claim 1, comprising 1.5 parts by weight to 2.5 parts by weight of an emulsifier with respect to total 100 parts by weight of a solid content.

9. A method for preparing a latex composition for dip molding, the method comprising:

a step of mixing a first carboxylic acid-modified nitrile-based copolymer latex and a second carboxylic acid-modified nitrile-based copolymer latex, wherein
the first carboxylic acid-modified nitrile-based copolymer latex comprises a first carboxylic acid-modified nitrile-based copolymer comprising a first conjugated diene-based monomer unit, a first ethylenically unsaturated nitrile-based monomer unit, and a first ethylenically unsaturated acid monomer unit,
the second carboxylic acid-modified nitrile-based copolymer latex comprises a second carboxylic acid-modified nitrile-based copolymer comprising a second conjugated diene-based monomer unit and a second ethylenically unsaturated nitrile-based monomer unit, and an alkaline water-soluble resin unit, and
the second carboxylic acid-modified nitrile-based copolymer latex is prepared by mixing a second conjugated diene-based monomer, a second ethylenically unsaturated nitrile-based monomer, and an alkaline water-soluble resin solution, and subjecting the mixture to emulsion polymerization.

10. The method for preparing a latex composition for dip molding according to claim 9, wherein the first carboxylic acid-modified nitrile-based copolymer latex and the second carboxylic acid-modified nitrile-based copolymer latex are mixed in a weight ratio of 1.00: 0.20 to 1.25.

11. The method for preparing a latex composition for dip molding according to claim 9, wherein the alkaline water-soluble resin solution is used in an amount of 5 parts by weight to 25 parts by weight with respect to 100 parts by weight of the total amount of the second conjugated diene-based monomer and the second ethylenically unsaturated nitrile-based monomer, based on the solid content.

12. The method for preparing a latex composition for dip molding according to claim 9, wherein the alkaline water-soluble resin solution is injected at least twice in installments before and after the initiation of the emulsion polymerization.

13. The method for preparing a latex composition for dip molding according to claim 9, wherein

the alkaline water-soluble resin solution is first injected before the initiation of the emulsion polymerization, and second injected after the initiation of the emulsion polymerization, and

the second injection is continuously performed during a polymerization conversion ratio range of 30% to 70%.

14. The method for preparing a latex composition for dip molding according to claim 13, wherein the alkaline water-soluble resin solution in the first injection and the alkaline water-soluble resin solution in the second injection have a weight ratio of 1:0.2 to 1 based on the solid content.

15. The method for preparing a latex composition for dip molding according to claim 9, wherein the alkaline water-soluble resin solution is prepared by a preparation method comprising:

   a step of emulsion polymerizing a third conjugated diene-based monomer, a third ethylenically unsaturated nitrile-based monomer, and a third ethylenically unsaturated acid monomer in a solvent to prepare a polymer latex; and
   a step of injecting a pH adjusting agent to the polymer latex.

16. The method for preparing a latex composition for dip molding according to claim 9, wherein the alkaline water-soluble resin solution has a pH of 7.0 to 10.0 at 25°C.

17. The method for preparing a latex composition for dip molding according to claim 9, wherein the first carboxylic acid-modified nitrile-based copolymer latex is prepared by emulsion polymerizing a first conjugated diene-based monomer; a first ethylenically unsaturated nitrile-based monomer; and a first ethylenically unsaturated acid monomer in a solvent.

18. A molded product comprising a layer derived from the latex composition for dip molding according to claim 1.

## INTERNATIONAL SEARCH REPORT

| International application No. |
|---|
| **PCT/KR2025/001522** |

| A. | CLASSIFICATION OF SUBJECT MATTER |
|---|---|

**C08L 9/04**(2006.01)i; **C08F 236/12**(2006.01)i; **C08F 2/24**(2006.01)i; **C08F 2/44**(2006.01)i; **C08F 2/00**(2006.01)i; **B29C 41/00**(2006.01)i

According to International Patent Classification (IPC) or to both national classification and IPC

| B. | FIELDS SEARCHED |
|---|---|

Minimum documentation searched (classification system followed by classification symbols)

C08L 9/04(2006.01); C08F 2/22(2006.01); C08F 20/06(2006.01); C08F 236/04(2006.01); C08F 236/12(2006.01); C08J 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 라텍스(latex), 공액디엔(conjugated diene), 에틸렌성 불포화 니트릴(ethylenically unsaturated nitrile), 에틸렌성 불포화산(ethylenically unsaturated acid), 알칼리 수용성 수지(alkali soluble resin)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2016-0046166 A (LG CHEM, LTD.) 28 April 2016 (2016-04-28)<br>See claims 1-16; and paragraphs [0038] and [0039]. | 1-18 |
| Y | KR 10-1996-0022577 A (KOREA CHEMICAL CO., LTD.) 18 July 1996 (1996-07-18)<br>See claims 1-18. | 1-18 |
| A | KR 10-2023-0041630 A (LG CHEM, LTD.) 24 March 2023 (2023-03-24)<br>See claims 1-12. | 1-18 |
| A | WO 2016-181410 A2 (APCOTEX INDUSTRIES LIMITED et al.) 17 November 2016 (2016-11-17)<br>See claims 1-15. | 1-18 |
| A | KR 10-2615579 B1 (KOREA KUMHO PETROCHEMICAL CO., LTD.) 20 December 2023 (2023-12-20)<br>See claims 1-12. | 1-18 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 May 2025** | **12 May 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2025/001522**

| Patent document cited in search report | | | Publication date (day/month/year) | Patent family member(s) | | | Publication date (day/month/year) |
|---|---|---|---|---|---|---|---|
| KR | 10-2016-0046166 | A | 28 April 2016 | CN | 106661307 | A | 10 May 2017 |
| | | | | CN | 106661307 | B | 12 March 2019 |
| | | | | JP | 2017-532406 | A | 02 November 2017 |
| | | | | JP | 6360970 | B2 | 18 July 2018 |
| | | | | KR | 10-1795842 | B1 | 08 November 2017 |
| | | | | US | 10023728 | B2 | 17 July 2018 |
| | | | | US | 2017-0283599 | A1 | 05 October 2017 |
| | | | | WO | 2016-064173 | A1 | 28 April 2016 |
| KR | 10-1996-0022577 | A | 18 July 1996 | KR | 10-0149696 | B1 | 15 October 1998 |
| KR | 10-2023-0041630 | A | 24 March 2023 | CN | 117794995 | A | 29 March 2024 |
| | | | | EP | 4403602 | A1 | 24 July 2024 |
| | | | | JP | 2024-534817 | A | 26 September 2024 |
| | | | | TW | 202321325 | A | 01 June 2023 |
| | | | | WO | 2023-043234 | A1 | 23 March 2023 |
| WO | 2016-181410 | A2 | 17 November 2016 | WO | 2016-181410 | A3 | 12 January 2017 |
| KR | 10-2615579 | B1 | 20 December 2023 | CN | 117980361 | A | 03 May 2024 |
| | | | | JP | 2024-533169 | A | 12 September 2024 |
| | | | | KR | 10-2023-0039948 | A | 22 March 2023 |
| | | | | TW | 202317653 | A | 01 May 2023 |
| | | | | US | 2024-0384072 | A1 | 21 November 2024 |
| | | | | WO | 2023-043115 | A1 | 23 March 2023 |

Form PCT/ISA/210 (patent family annex) (July 2022)

**REFERENCES CITED IN THE DESCRIPTION**

**Patent documents cited in the description**

- KR 1020240015242

- KR 101775798 B1